## Europäisches Patentamt

## European Patent Office

## Office européen des brevets

(19)

(11) Numéro de publication: **0 112 223**
**B1**

(12) **FASCICULE DE BREVET EUROPÉEN**

(45) Date de publication du fascicule du brevet:
**18.03.87**

(21) Numéro de dépôt: **83402296.4**

(22) Date de dépôt: **29.11.83**

(51) Int. Cl.⁴: **C 03 B 37/025,** C 03 B 37/02, C 03 B 37/14, C 03 C 25/02, B 23 K 26/02

(54) Procédé de fabrication d'une fibre conservant la polarisation circulaire, et dispositif mettant en oeuvre ce procédé.

(30) Priorité: **10.12.82 FR 8220767**

(43) Date de publication de la demande:
**27.06.84 Bulletin 84/26**

(45) Mention de la délivrance du brevet:
**18.03.87 Bulletin 87/12**

(84) Etats contractants désignés:
**DE GB IT NL SE**

(56) Documents cité:
**WO-A-82/00635**
**WO-A-83/00232**
**DE-B-3 010 005**
**FR-A-2 515 693**
**GB-A-2 023 127**
**US-A-4 058 699**
**US-A-4 201 559**

**NAVY TECHNICAL DISCLOSURE BULLETIN, vol. 5, no. 12, décembre 1980, pages 7-12, Washington D.C., USA. S. C. RASHLEIGH: "Fabrication of circularly birefringent single mode fibers"**

(73) Titulaire: **THOMSON- CSF, 173, Boulevard Haussmann, F-75379 Paris Cedex 08 (FR)**

(72) Inventeur: **Graindorge, Philippe, THOMSON- CSF SCPI 173, bld Haussmann, F-75379 Paris Cedex 08 (FR)**
Inventeur: **Arditty, Hervé, THOMSON- CSF SCPI 173, bld Haussmann, F-75379 Paris Cedex 08 (FR)**

(74) Mandataire: **Weinmiller, Jürgen, Lennéstrasse 9, D-8133 Feldafing (DE)**

## Description

La présente invention se rapporte à un procédé de fabrication d'une fibre conservant la polarisation circulaire et à un dispositif mettant en oeuvre un tel procédé.

Les fibres monomodes fabriquées habituellement pour les télécommunications présentent toujours une petite quantité de biréfringence linéaire, et de biréfringence circulaire. Par suite ces fibres ne conservent ni la polarisation linéaire, ni la polarisation circulaire.

Il est possible de rendre la fibre très biréfringente linéaire en cassant la symétrie circulaire au profit d'une symétrie planaire.

Il est également possible de considérer une méthode inverse, qui consiste à introduire une biréfringence circulaire élevée de façon à conserver la polarisation circulaire.

Une solution pour créer cette polarisation circulaire consiste à soumettre la fibre de verre à une contrainte statique de torsion, par exemple appliquée extérieurement par torsion entre ses deux extrémités : un effet de la torsion de cette fibre est d'introduire une biréfringence circulaire dans celle-ci.

La présente invention a pour objet un procédé permettant de conserver un état de torsion dans la fibre. Elle permet d'obtenir une fibre de structure hélicoïdale ou structure chiralique. Mais cette fibre peut être de section quelconque, elle peut ainsi avoir une géométrie complexe.

Toute contrainte de torsion créant une biréfringence circulaire, un procédé de l'art connu décrit dans la demande de brevet européenne EP-A1-78733, publiée le 11.05.83 et ainsi comprise dans l'état de la technique au sens de l'article 54(3) de la CBE, consiste à torsader une fibre déjà étirée et de la maintenir mécaniquement sous cet état de contrainte, en réalisant un enrobage de la fibre avec une enveloppe rigide telle qu' une couche supplémentaire de verre.

Les inconvénients de ce procédé sont:
- d'une part une fragilisation de la fibre par l'introduction de contraintes importantes à la périphérie de la fibre.
- d'autre part la nécessité de fixations mécaniques extérieures "maintenant" la torsion.

Un document de l'art connu DE-B1-3010005 décrit des fibres torsadées par rapport à leur axe longitudinal, leur état de torsion étant conservé par enrobage de ces fibres, et un procédé de fabrication de telles fibres dans lequel on torsade les fibres pendant leur étirage, et on enrobe alors la partie torsadée de celles-ci avec une couche suffisante pour conserver l'état de torsion dans la fibre.

Un article paru dans "Navy technical Disclosure bulletin" de décembre 1980 (vol 5, n° 12) intitulé "Fabrication of circularly birefringent single mode fibers" de S. C. RASHLEIGH décrit un procédé de fabrication d'une fibre optique torsadée. La fibre, à la sortie du four, a son coeur qui se solidifie plus rapidement que sa gaine. En effet le coeur est en silice et la gaine en borosilicate. Lorsque la fibre est soumise à la torsion, le coeur déjà solidifié est torsadé, mais la gaine encore molle n'est pas contrainte par cette torsion; quand la gaine se solidifie à son tour, elle "mémorise" la torsion et la contrainte résultante dans le coeur.

Par contre, l'invention permet de pallier les inconvénients cités précédemment en considérant une étape de refusion de la surface de la fibre réalisée simultanément à des étapes d'étirage et de torsion de celle-ci.

L'invention a pour objet un procédé de fabrication d'une fibre conservant la polarisation circulaire, comportant des étapes:
- d'étirage suivant un axe de cette fibre issue d'une source de matière formable
- de torsion de cette fibre autour de l'axe d'étirage; ce qui crée dans cette fibre des contraintes de torsion, caractérisé en ce qu' il comprend une étape
- de refusion en superficie d'une partie de volume de la fibre dans une zone ou cette fibre est soumise à ces contraintes de torsion et en ce que ces trois étapes sont réalisées en simultanéité.

Elle a, en outre, pour objet un dispositif de fabrication mettant en oeuvre un tel procédé, comprenant des moyens d'étirage d'une fibre issue d'une source de matière formable et des moyens de torsion de cette fibre, des moyens de serrage de cette fibre étant disposés à la sortie de la source de matière formable, caractérisé en ce qu'il comprend des moyens de refusion de la fibre situés entre ces moyens de serrage et ces moyens de torsion et d'étirage de la fibre.

L'invention sera mieux comprise et d'autres caractéristiques apparaitront au moyen de la description qui suit en se reportant aux figures qui l'accompagnent parmi lesquelles:
- la figure 1 illustre schématiquement le procédé de l'art antérieur;
- la figure 2 illustre les inconvénients d'un tel procédé;
- la figure 3 illustre un aspect particulier du procédé de fabrication selon l'invention;
- les figures 4 à 8 illustrent le procédé de fabrication selon l'invention;
- la figure 9 illustre un dispositif de mise en oeuvre du procédé selon l'invention;
la figure 10 illustre un aspect particulier du dispositif illustré à la figure 9.

Les fibres dites monomodes sont en fait des fibres pour lesquelles la solution aux équations de propagation est unique, mais dont le mode est dégénéré. Deux modes dont les constantes de propagations sont identiques, mais dont les polarisations sont orthogonales se propagent donc dans la fibre. Cette dégenerescence peut, par ailleurs, être levée par toute anisotropie de la fibre, qu'elle soit intrisèque ou due à des perturbations extérieures. La conséquence est que les fibres "réelles" sont bimodes, chacun des modes étant polarisé orthogonalement à l'autre; Ce qui entraine d'une part la variation de vitesse de propagation d'une polarisation à l'autre qui va réduire la bande passante que peut transmettre la fibre, et d'autre part le couplage aléatoire entre les deux modes va produire un état de polarisation aléatoire à la sortie de la fibre.

Ce problème est résolu en imposant une forte différence de constante de propagation entre les deux modes propres transmis dans la fibre de manière à minimiser le couplage entre ces deux modes. Une onde incidente qui est polarisée suivant des modes propres reste alors dans ce mode, et la fibre peut alors être considérée comme étant monomode pour cette polarisation incidente.

Pour induire une différence entre les constantes de propagation de deux modes on peut créer de la biréfringence linéaire dans la fibre; les deux modes sont alors deux polarisations linéaires orthogonales, ou de la biréfringence circulaire, les deux modes sont dans ce cas les deux polarisations circulaires droite et gauche. Ces biréfringences sont induites par effet élasto-optique sous l'action de contraintes extérieures, soit de pincement, soit de torsion.

Dans la détermination de l'amplitude de la biréfringence, les contraintes prises en compte sont celles agissant sur le matériau dans lequel se propage la lumière, c'est à dire sur le coeur de la fibre.

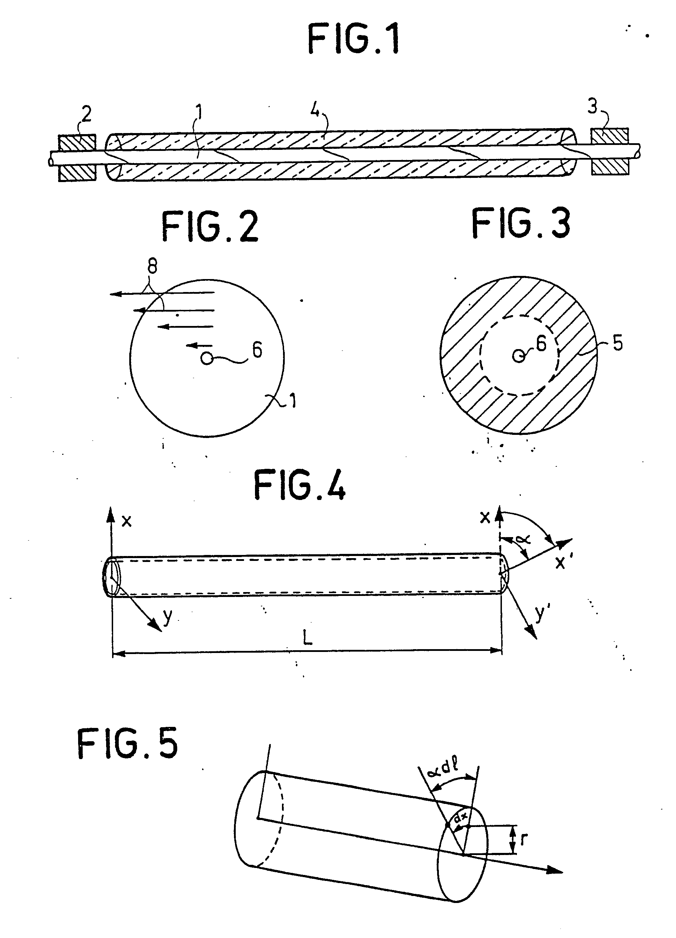

Toute contrainte de torsion créant une biréfringence circulaire, le procédé de l'art connu utilisé pour conserver la polarisation circulaire dans la fibre consiste à torsader une fibre déjà étirée et de la maintenir mécaniquement sous cet état de contrainte, comme represente a la figure 1.

En considérant une fibre 1 déjà fabriquée, en partant d'une préforme par exemple, et par simple étirage, si on tord un grand nombre de tours en la maintenant à ses deux extrémités, il ne reste plus qu'à "l'immobiliser", pour qu'elle garde ses propriétés de conservation de polarisation, par un frettage rigide 4 rapporté par exemple. Ce frettage 4 peut être realise par un enrobage de la fibre avec une enveloppe rigide telle qu'une couche supplémentaire de verre. Sur la figure 1 est représentée une fibre déjà fabriquée qui a été ensuite torsadée, en étant maintenue à ses extrémités 2 et 3, une frette rigide 4 étant alors rapportée pour l'immobiliser.

les inconvénients de ce procédé sont:
- d'une part une fragilisation de la fibre par l'introduction de contraintes importantes 8 à la périphérie de la fibre qui sont représentées à la figure 2
- d'autre part la nécessité de fixations mécaniques extérieures "maintenant" la torsion.

Le procédé proposé consiste à soumettre la fibre à des contraintes de torsion pendant son étirage et à refondre une partie du volume de la fibre située à la périphérie de celle-ci, comme représenté à la figure 3; la zone 5 étant la zone de refusion. Ceci a pour conséquence de relacher les contraintes sur la périphérie alors qu'elles sont maintenues sur le coeur 6 de la fibre. Lorsque les contraintes de torsion extérieure appliquées à la fibre sont relachées, le champ des contraintes se répartit de façon à ce que les contraintes supportées par la périphérie soient très faibles. Le bilan des contraintes dans la fibre doit être nul. Cette refusion de la fibre en superficie est effectuée sur une fibre sans protection maintenue en torsion. C'est à dire sur la fibre en silice avant tout dépôt d'une gaine de protection.

Le résultat est tel que la zone centrale est soumise à des contraintes de torsions pratiquement égales à celles appliquées pendant l'étirage, alors que les contraintes supportées par la partie refondue sont négligeables. En effet, l'intégrale des moments des contraintes sur chacune des zones sont opposées, ce qui fait que les contraintes moyennes de chacunes des zones sont dans le rapport des surfaces des zones, donc très faibles près de la peripherie et très fortes près du coeur. Ce procédé de refusion permet d'avoir simultanément des contraintes élevées au niveau du coeur de la fibre et des contraintes très faibles à la périphérie de cette fibre ainsi qu'une absence de torsion résiduelle.

Le procédé de l'invention, consiste donc à contraindre la fibre en torsion et à la refondre superficiellement alors qu'elle est sous contrainte. En volume par exemple 3/4 ou 9/10 de la fibre sont touchés par la refusion, le coeur n'étant pas touché par celle-ci; c'est à dire une partie centrale d'environ 10 a 20 micromètres n'est pas touchée.

Ainsi lors de l'étirage de la fibre 1, une rotation est imposée à la fibre, par une machine tournant a N tours/minute. Par ailleurs la fibre est étirée à une vitesse de M mètres/minute. La conservation du nombre de tours appliqués à la fibre conduit à une torsion uniforme de la fibre de N/M tours par mètre. On peut donc considérer séparément un morceau de fibre de longueur L unité (par exemple 1 mètre).

L'effet de la torsion est de déplacer en rotation l'une des extrémités d'un angle α par rapport à l'autre, comme représenté sur la figure 4 où la fibre a subi une torsion de

$$\frac{\alpha}{2\pi}$$

tours par mètre.

Cette rotation se répartit uniformément sur la longueur de la fibre, si bien qu'entre deux plans séparés d'une longueur d λ, la rotation d'axe est α d λ. Sur une section de la fibre le déplacement de tout point est donc α d λr où r représente la distance du point considéré au centre de la fibre comme représenté à la figure 5.

Le champ des contraintes est donc un champ de torsion, dont l'intensité σ est donnée par la formule:

σ = μ r α

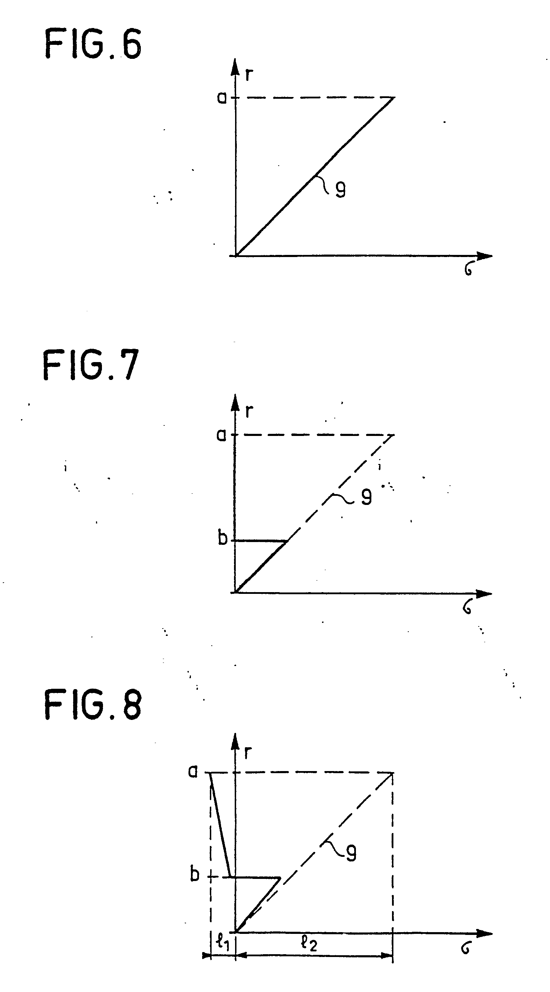

ou μ est le module de rigidité au glissement, dont la courbe de variation est représentée sur la figure 6 où la distance a représente le rayon de la fibre.

3

Si l'on refond alors une partie de la fibre, tout en maintenant la position de tous les points de la fibre, le champ des contraintes sera nul dans la partie refondue: ce qui explique la nouvelle courbe de variation représentée sur la figure 7, où la distance a-b représente la profondeur de refusion.

On relache alors la fibre, c'est à dire que la torsion qui était imposée est relachée. Un équilibre s'établit alors, de manière à ce que le couple total appliqué à la fibre soit nul. Il se produit alors une torsion inverse à celle appliquée au départ, et qui vient équilibrer la torsion résiduelle après refusion. La fibre subit donc une torsion - $\beta$, qui induit un champ des contraintes qui en chaque point vaut - $\beta$ $\mu$r. Ce champ est tel que le moment total soit nul:

$$\int_{o}^{b} (\alpha_{/}\mu r) . r . 2 \pi r \, dr - \int_{o}^{a} (\beta_{/}\mu r) . r . 2 \pi r . dr = 0$$

où $\alpha$ $\mu$r représente la contrainte; $(\alpha/\mu r)$ r le moment de la contrainte; $\int_{o}^{b}$

$(\alpha \mu r)$ r. 2 $\pi$r. dr l'intégration sur une couronne de rayon r et d'épaisseur dr. Il en est de même, avec le deuxième terme qui utilise $\beta$, d'où l'équation:

$$\frac{\pi \alpha_{/}\mu b^{4}}{2} - \frac{\pi \beta_{/}\mu a^{4}}{2} = 0$$

ce qui se réduit à: $\alpha b^{4} - \beta a^{4} = 0$

ainsi, si la profondeur de fusion est de 45 micromètres pour une fibre de rayon 60 micromètre, (a = 60$\mu$, b = 15 $\mu$) le rapport entre les angles de torsion sera donc

$$\frac{\alpha}{\beta} = \frac{a^{4}}{b^{4}} = 256$$

comme représenté à la figure 8, ou la couche 9 représente la courbe avant refusion. Les contraintes à la surface de la fibre sont donc divisées par 256, alors que dans la partie utile (partie non refondue) elle sont multipliées par

$$(1 - \frac{1}{256}).$$

On peut donc négliger les contraintes à la surface de la fibre, et négliger la diminution des contraintes sur le coeur de la fibre. Le matériau après refusion reste en place.

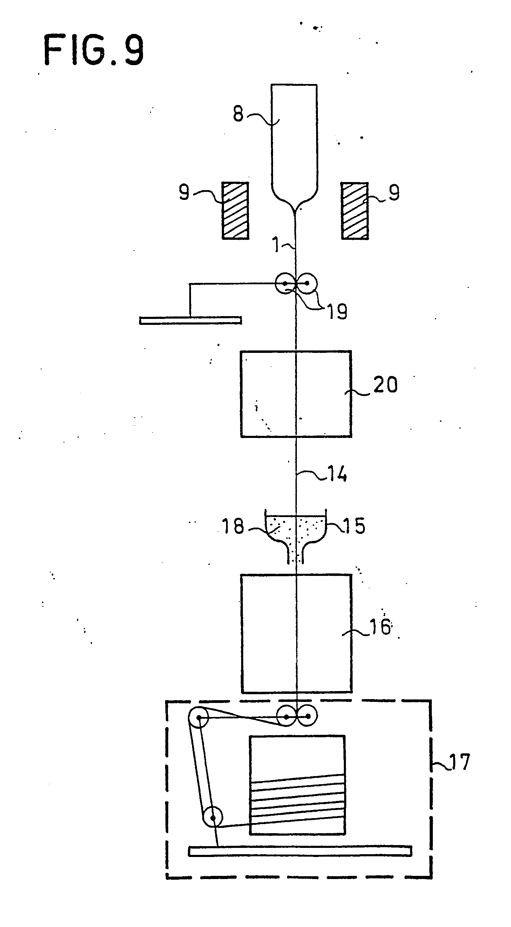

Un dispositif de mise en oeuvre de ce procédé est représenté à la figure 9. Cette figure illustre les différents éléments d'une machine de fibrage mettant en oeuvre le procédé de l'invention. Ces différents éléments sont les suivants: une préforme 8 qui est positionnée à l'intérieur des moyens de fusion 9, qui peuvent être un chalumeau, un four à effet Joule, un four à induction hautes, moyennes ou basses fréquences, est à l'origine de la fibre 1. Ces moyens de fusion 9 ramollissent la préforme 8. La matière commence a couler et l'on obtient par étirage et torsion une fibre 1.

Le premier élément après le four de tirage est tel que la torsion appliquée à la fibre n'est pas absorbée par le cône de tirage. (Il s'agit par exemple de poulies 19 enduites de matériau anti-dérapant (caoutchouc, silicone) dans laquelle la fibre ne peut pas glisser. Le four de refusion 20 permet de refondre une partie du volume de la fibre 1 située à la périphérie de celle-ci. On peut alors réaliser une enduction à partir de l'enducteur 15 d'un matériau 18 de protection qui peut être du plastique ou du métal. Le dispositif 16 permet la solidification de la couche de protection du matériau 18 applique par l'enducteur 15. Le portique fournissant une contrainte de torsion à la fibre est un tambour d'enroulement 17. Ce tambour 17 imprime à la fibre un nombre de tours de torsion proportionnel à la vitesse d'étirage un dispositif de fibrage permettant d'étirer et de torsader la fibre pendant sa fabrication.

Le four de refusion, peut être conçu de différentes façons: on peut par exemple utiliser un four à induction, un four à graphite.

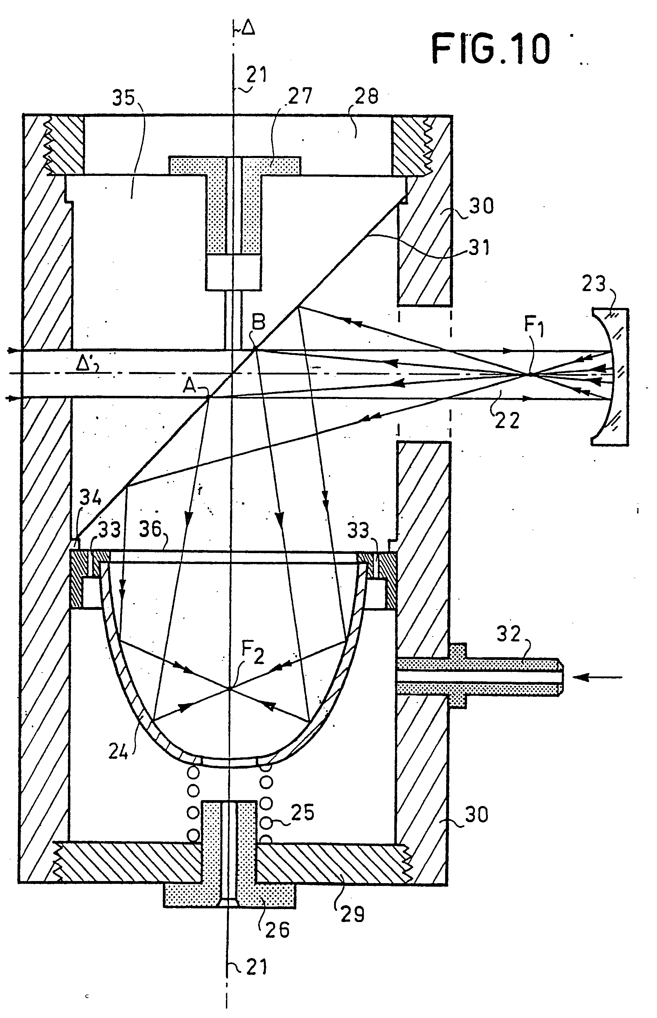

On peut également utiliser un laser à dioxyde de carbonne ($CO_2$), par exemple. Le faisceau est dirigé sur un miroir parabolique (ou sphérique) qui, réfléchi sur un miroir ellipsoïdal, permet de concentrer l'énergie sur un anneau entourant la fibre comme représenté à la figure 10. Ce dispositif permet une fusion de la fibre avec des puissances laser très faibles (10 Watts) et d'obtenir une bonne symétrie de révolution du chauffage.

La profondeur de la refusion peut être controlée en mesurant le couple appliquée par la fibre sur les poulies de serrage.

# 0 112 223

## Revendications

1/ Procédé de fabrication d'une fibre (1) conservant la polarisation circulaire, comportant des étapes:
- d'étirage suivant un axe de cette fibre (1) issue d'une source (8) de matière formable.
- de torsion de cette fibre (1) autour de l'axe d'étirage; ce qui crée dans cette fibre des contraintes de torsion,
caractérisé en ce qu'il comprend une étape
- de refusion en superficie d'une partie de volume de la fibre (1) dans une zone ou cette fibre est soumise à ces contraintes de torsion et en ce que ces trois étapes sont réalisées en simultanéité.

2/ Procédé selon la revendication 1, caractérisé en ce qu' il comporte une opération ultérieure d'enduction de la fibre (1) d'un matériau de protection.

3/ Procédé selon la revendication 2, caractérisé en ce que ce matériau de protection est du plastique.

4/ Procédé selon la revendication 2, caractérisé en ce que ce matériau de protection est du métal.

5/ Dispositif mettant en oeuvre ce procédé selon l'une quelconque des revendications 1 à 4, comprenant des moyens d'étirage d'une fibre (1) issue d'une source (8) de matière formable et des moyens de torsion de cette fibre, des moyens de serrage (19) de cette fibre (1) étant disposés à la sortie de la source de matière formable (8), caractérisé en ce qu'il comprend des moyens de refusion (20) de la fibre situés entre ces moyens de serrage et ces moyens de torsion et d'étirage de la fibre (1).

6/ Dispositif selon la revendication 5, caractérisé en ce que les moyens de refusion (20) de la fibre comprennent un four à induction.

7/ Dispositif selon la revendication 5, caractérisé en ce que les moyens de refusion (20) de la fibre comprennent un four à graphite.

8/ Dispositif selon la revendication 5, caractérisé en ce que les moyens de refusion (20) de la fibre comprennent un laser à dioxyde de carbone.

9/ Dispositif selon la revendication 5, caractérisé en ce que les moyens de serrage comprennent des poulies (19) enduites de matériau anti-dérapant.

10/ Dispositif selon la revendication 5, caractérisé en ce que la source (8) de matière est une préforme.


## Patentansprüche

1. Verfahren zur Herstellung einer Faser (1), die die Zirkular-Polarisation beibehält, mit den Verfahrensstufen:
- Ausziehen dieser Faser entlang einer ihrer Achsen (1), ausgehend von einer Quelle (8) formbaren Materials,
- Verwinden dieser Faser um die Ziehachse, was in dieser Faser Torsionsspannungen bildet,
dadurch gekennzeichnet, daß es eine Stufe
- des oberflächlichen erneuten Schmelzens eines Teils des Volumens der Faser (1) in einem Bereich, in dem diese Faser Torsionsspannungen unterliegt, und daß diese drei Stufen gleichzeitig durchgeführt werden.

2. Verfahren nach Anspruch 1, dadurch gekennzeichnet, daß es einen späteren Arbeitsgang des Oberziehens der Faser (1) mit einem Schutzmaterial aufweist.

3. Verfahren nach Anspruch 2, dadurch gekennzeichnet, daß das Schmutzmaterial ein Kunststoff ist.

4. Verfahren nach Anspruch 2, dadurch gekennzeichnet, daß dieses Schutzmaterial ein Metall ist.

5. Vorrichtung, die das Verfahren nach einem beliebigen der Ansprüche 1 bis 4 anwendet, mit Ausziehmitteln für eine von einer Quelle (8) formbaren Materials kommende Faser (1) und mit Mitteln zum Verdrehen dieser Faser, wobei Mittel (19) zum Einklemmen dieser Faser (1) am Ausgang der Quelle (8) formbaren Materials angeordnet sind, dadurch gekennzeichnet, daß sie Mittel (20) zum erneuten Schmelzen der Faser aufweist, die zwischen den Einklemmmitteln und den Torsions- und Ausziehmitteln der Faser (1) angeordnet sind.

6. Vorrichtung nach Anspruch 5, dadurch gekennzeichnet, daß die Mittel (20) zum erneuten Schmelzen der Faser einen Induktionsofen aufweisen.

7. Vorrichtung nach Anspruch 5, dadurch gekennzeichnet, daß die Mittel (20) zum erneuten Schmelzen der Faser einen Graphitofen aufweisen.

8. Vorrichtung nach Anspruch 5, dadurch gekennzeichnet, daß die Mittel (20) zum erneuten Schmelzen der Faser einen Kohlendioxidlaser aufweisen.

9. Vorrichtung nach Anspruch 5, dadurch gekennzeichnet, daß die Klemmmittel mit Antirutschmaterial belegte Rollen (19) aufweisen.

10. Vorrichtung nach Anspruch 5, dadurch gekennzeichnet, daß die Materialquelle (8) ein Rohling ist.


## Claims

1. A method for manufacturing a fiber (1) keeping circular polarisation, comprising the steps of:
- drawing out said fiber (1) from a source (8) of formable material along an axis,
- twisting said fiber (1) about said drawing axis, thus creating twist stresses in said fiber,
characterized in that it comprises a step of

5

- superficially remelting a part of the volume of the fiber (1) in an area where this fiber is submitted to these twist stresses, and in that these three steps are carried out simultaneously.

2. A method according to claim 1, characterized in that it comprises a further operation of coating the fiber (1) with a protective material.

3. A method according to claim 2, characterized in that this protective material is a plastic material.

4. A method according to claim 2, characterized in that this protective material is metallic.

5. A device for carrying out the method according to any one of claims 1 to 4, comprising means for drawing out a fiber (1) coming from a source (8) of formable material and means for twisting this fiber, means (19) for gripping said fiber (1) being disposed at the outlet of the source (8) of formable material, characterized in that it comprises means (20) for remelting said fiber which are situated between said gripping means and said means for twisting and drawing out the fiber (1).

6. A device according to claim 5, characterized in that the means (20) for remelting the fiber comprise an induction oven.

7. A device according to claim 5, characterized in that the means (20) for remelting the fiber comprise a graphit oven.

8. A device according to claim 5, characterized in that the means (20) for remelting the fiber comprise a carbon dioxide laser.

9. A device according to claim 5, characterized in that the gripping means comprise pulleys (19) coated with slip-avoiding material.

10. A device according to claim 5, characterized in that the source (8) of material is a preform.

# FIG.1

# FIG.2

# FIG.3

# FIG.4

# FIG.5

# FIG.6

# FIG.7

# FIG.8

# FIG.9

# FIG.10